# EUROPEAN PATENT SPECIFICATION

(11) **EP 4 700 591 B1**
(45) Date of publication and mention of the grant of the patent: **16.09.2026**
(21) Application number: 25159316.6
(22) Date of filing: 21.02.2025
(51) Int. Cl.: H04L 7/033, H04L 7/10, G09G 5/00, H04N 1/00, G06F 13/42

(54) **IMAGE TRANSMITTING APPARATUS, IMAGE TRANSMISSION/RECEPTION SYSTEM, PROGRAM, AND METHOD**
BILDÜBERTRAGUNGSVORRICHTUNG, BILDÜBERTRAGUNGS-/EMPFANGSSYSTEM, PROGRAMM UND VERFAHREN
APPAREIL DE TRANSMISSION D'IMAGE, SYSTÈME DE TRANSMISSION/RÉCEPTION D'IMAGE, PROGRAMME ET PROCÉDÉ

(30) Priority: 20.08.2024 JP 2024138513
(43) Date of publication of application: 25.02.2026
(73) Proprietor: FUJIFILM Business Innovation Corp., Minato-ku Tokyo (JP)
(72) Inventor: BANDO, Yoshifumi, Yokohama-shi (JP); YAMASAKI, Hideki, Yokohama-shi (JP); SAITOH, Ryoko, Yokohama-shi (JP); NISHIDA, Tomoyo, Yokohama-shi (JP)
(74) Representative: Haseltine Lake Kempner LLP

(56) References cited:
- JP-A- 2017 063 375
- JP-A- 2019 110 449
- JP-B2- 6 576 185
- TW-A- 201 112 715
- US-A1- 2017 094 067
- US-A1- 2020 084 504

## Description

### Background

### (i) Technical Field

The present disclosure relates to an image transmitting apparatus, an image transmission/reception system, a program, and a method.

### (ii) Related Art

Japanese Unexamined Patent Application Publication No. 2017-063375 discloses a data communication control apparatus which controls a V-by-One (VBO) receiver by using an analog front end which converts an analog signal to a digital signal. Through this control, the data communication control apparatus suppresses influence from noise while the number of transmission lines is reduced, compared with the case of all-the-time control based on multiple control signals which are received through multiple transmission paths.

Japanese Unexamined Patent Application Publication No. 2019-110449 discloses a data communication apparatus which is capable of transmitting, from a reception-side circuit to a transmission-side circuit, data other than a lock signal through the same signal line.

### Summary

Accordingly, it is an object of the present disclosure to provide an image transmitting apparatus, an image transmission/reception system, a program, and a method which achieve improvement of noise immunity compared with the case in which a lock signal from an image receiving apparatus is input, as it is, to a transmission circuit of an image transmitting apparatus.

According to a first aspect of the present disclosure, there is provided an image transmitting apparatus comprising: a transmission circuit that, in response to an input lock signal switching from a first logic state to a second logic state, transmits, to an image receiving apparatus, transmission data, the transmission data being data in which a clock signal is superimposed on image data, the first logic state indicating that communication has not been established, the second logic state indicating that communication has been established; and a lock-signal masking unit that receives the lock signal from the image receiving apparatus, and that, even when the received lock signal enters the second logic state and then varies to the first logic state, only in a case where the first logic state continues for a preset time or longer, outputs a lock signal of the first logic state to the transmission circuit.

According to the image transmitting apparatus of a second aspect of the present disclosure, in the image transmitting apparatus of the first aspect, when a period for which the lock signal is in the first logic state continues for a time longer than a predicted time for which the logic state of the lock signal is affected by occurrence of noise, the lock-signal masking unit outputs the lock signal of the first logic state to the transmission circuit.

According to a third aspect of the present disclosure, there is provided an image transmission/reception system comprising: an image receiving apparatus including a reception circuit that extracts a clock signal from transmission data to obtain image data from the transmission data by using the extracted clock signal, the transmission data being transmitted from an image transmitting apparatus, and that, when extraction of a clock signal from the transmission data is ready, varies a lock signal from a first logic state to a second logic state, the lock signal indicating whether communication has been established, the first logic state indicating that the communication has not been established, the second logic state indicating that the communication has been established, and a lock-signal transmission controller that, when the lock signal which is output from the reception circuit varies from the second logic state to the first logic state, outputs, to the image transmitting apparatus, a signal as a lock signal, the output signal varying in a preset manner; and the image transmitting apparatus including a transmission circuit that, when the lock signal which is input varies from the first logic state to the second logic state, transmits, to the image receiving apparatus, the transmission data in which a clock signal is superimposed on image data, and a lock-signal masking unit that receives the lock signal from the image receiving apparatus, and that, when the received lock signal varies in the preset manner, outputs a lock signal of the first logic state to the transmission circuit.

According to the image transmission/reception system of a fourth aspect of the present disclosure, in the image transmission/reception system of the third aspect, when the lock signal which is output from the reception circuit varies from the second logic state to the first logic state, the lock-signal transmission controller outputs, to the image transmitting apparatus, a lock signal in which the first logic state continues for a preset time or longer. When the period for which the lock signal is in the first logic state continues for the preset time or longer, the lock-signal masking unit outputs a lock signal of the first logic state to the transmission circuit.

According to the image transmission/reception system of a fifth aspect of the present disclosure, in the image transmission/reception system of the fourth aspect, in a case where the lock signal which is output from the reception circuit varies from the second logic state to the first logic state, when the period for which the lock signal is in the first logic state continues at least for a time longer than a predicted time for which the logic state of the lock signal is affected by occurrence of noise, the lock-signal transmission controller outputs, to the image transmitting apparatus, a lock signal in which the first logic state continues for the preset time or longer.

According to the image transmission/reception system of a sixth aspect of the present disclosure, in the image transmission/reception system of the third aspect, when the lock signal which is output from the reception circuit varies from the second logic state to the first logic state, the lock-signal transmission controller outputs, to the image transmitting apparatus, a lock signal which enters the first logic state after varying between the first logic state and the second logic state a preset number of times. When the lock signal enters the first logic state after varying between the first logic state and the second logic state the preset number of times or more, the lock-signal masking unit outputs a lock signal of the first logic state to the transmission circuit.

According to the image transmission/reception system of a seventh aspect of the present disclosure, in the image transmission/reception system of the third aspect, the image transmitting apparatus further includes an adding unit that adds an error detecting code to image data which is to be transmitted to the image receiving apparatus. The image receiving apparatus further includes a detection unit that performs error detection on the image data by using the error detecting code added to the image data obtained by the reception circuit. In response to the detection unit detecting an error in the image data, the lock-signal transmission controller outputs, to the image transmitting apparatus, a signal as a lock signal, the output signal varying in the preset manner.

According to an eighth aspect of the present disclosure, there is provided a program causing a computer to execute a process comprising: in an image transmitting apparatus including a transmission circuit that, in response to an input lock signal switching from a first logic state to a second logic state, the first logic state indicating that communication has not been established, the second logic state indicating that communication has been established, transmits, to an image receiving apparatus, transmission data in which a clock signal is superimposed on image data, receiving the lock signal from the image receiving apparatus; and, even when the received lock signal enters the second logic state and then varies to the first logic state, only in a case where the first logic state continues for a preset time or longer, outputting a lock signal of the first logic state to the transmission circuit.

According to a ninth aspect of the present disclosure, there is provided a method comprising: in an image transmitting apparatus including a transmission circuit that, in response to an input lock signal switching from a first logic state to a second logic state, the first logic state indicating that communication has not been established, the second logic state indicating that communication has been established, transmits, to an image receiving apparatus, transmission data in which a clock signal is superimposed on image data, receiving the lock signal from the image receiving apparatus; and, even when the received lock signal enters the second logic state and then varies to the first logic state, only in a case where the first logic state continues for a preset time or longer, outputting a lock signal of the first logic state to the transmission circuit.

The image transmitting apparatus of the first aspect achieves improvement of the noise immunity compared with the case in which a lock signal from an image receiving apparatus is input, as it is, to a transmission circuit of an image transmitting apparatus.

The image transmitting apparatus of the second aspect enables the transmission circuit to be prevented from receiving an erroneous lock signal, even when the logic state of the lock signal is affected by occurrence of noise.

The image transmission/reception system of the third aspect achieves improvement of the noise immunity compared with the case in which a lock signal from an image receiving apparatus is input, as it is, to a transmission circuit of an image transmitting apparatus.

The image transmission/reception system of the fourth aspect enables the transmission circuit to be prevented from receiving an erroneous lock signal, even when the logic state of the lock signal is affected by occurrence of noise.

The image transmission/reception system of the fifth aspect enables the transmission circuit to be prevented from receiving an erroneous lock signal, even when the logic state of the lock signal is affected by occurrence of noise.

The image transmission/reception system of the sixth aspect enables the transmission circuit to be prevented from receiving an erroneous lock signal, even when the logic state of the lock signal is affected by occurrence of noise.

The image transmission/reception system of the seventh aspect enables the result of error detection in image data to be notified from the image receiving apparatus to the image transmitting apparatus by using the lock signal.

The program of the eighth aspect achieves improvement of the noise immunity compared with the case in which a lock signal from an image receiving apparatus is input, as it is, to a transmission circuit of an image transmitting apparatus.

The method of the ninth aspect achieves improvement of the noise immunity compared with the case in which a lock signal from an image receiving apparatus is input, as it is, to a transmission circuit of an image transmitting apparatus.

### Brief Description of the Drawings

Exemplary embodiment of the present disclosure will be described in detail based on the following figures, wherein:
Fig. 1 is a block diagram illustrating the configuration of an image transmission/reception system as a comparison example;
Fig. 2 is a block diagram illustrating the configuration of an image transmission/reception system according to an exemplary embodiment of the present disclosure;
Fig. 3 is a timing chart for describing operations performed when an image transmission/reception system according to an exemplary embodiment of the present disclosure is initialized;
Fig. 4 is a timing chart for describing operations performed when a short noise is superimposed on a LOCKN signal;
Fig. 5 is a timing chart for describing operations performed in response to detection of an error in the case where a LOCKN signal is set to the H level for a time longer than the time period of noise; and
Fig. 6 is a timing chart for describing operations performed in response to detection of an error in the case where a LOCKN signal is varied between the H level and the L level a predetermined number of times.

### Detailed Description

An exemplary embodiment of the present disclosure will be described in detail by referring to the drawings.

A communication standard called V-by-One^{®} may be used in transmission/reception of image data. V-by-One uses a clock-embedded system in which transmission data, on the transmission side, of a pair of differential signals of data signal and clock information is transmitted to the reception side. When image data is transmitted/received in the clock-embedded system, the reception side performs a clock data recovery (CDR) training process on the transmission data, which is received from the transmission side, to extract the clock signal and the image data from the received transmission data. Through this process, V-by-One achieves high-speed transmission of image data because a skew is difficult to occur between the clock signal and the image data.

In V-by-One, when the CDR training process is completed on the reception side and extraction of a clock signal from transmission data is ready to be performed, notification indicating that communication has been established is transmitted by using a LOCKN signal from the reception side to the transmission side. Specifically, the LOCKN signal at the high level (hereinafter abbreviated as the H level) indicates that extraction of a clock signal from transmission data is not ready, that is, communication has not been established. The LOCKN signal at the low level (hereinafter abbreviated as the L level) indicates that extraction of a clock signal from transmission data is ready, that is, communication has been established. On the transmission side, the logic of the LOCKN signal transmitted from the reception side is checked. When the L level, which indicates that communication has been established, is confirmed, transmission data including image data is transmitted to the reception side.

However, after communication has been established between the transmission side and the reception side, when the logic of the LOCKN signal varies to the H level which indicates that the communication has not been established, the transmission side stops transfer of image data, and performs a CDR process again. The LOCKN signal, which is a single-ended signal, has a low noise immunity. This causes the following case: assume the case in which the LOCKN signal, which is to be at the L level, is set to the H level due to superimposition of noise on the LOCKN signal while transmission data including image data is being transmitted from the transmission side to the reception side; in this case, although the CDR on the reception side is in the normal lock state, a CDR training process is performed on the transmission side. As a result, there arises a problem in that transfer of image data is stopped although the stopping is not necessary. Therefore, improvement of noise immunity has been demanded so that, even when noise is superimposed on the LOCKN signal, transfer of image data is not stopped.

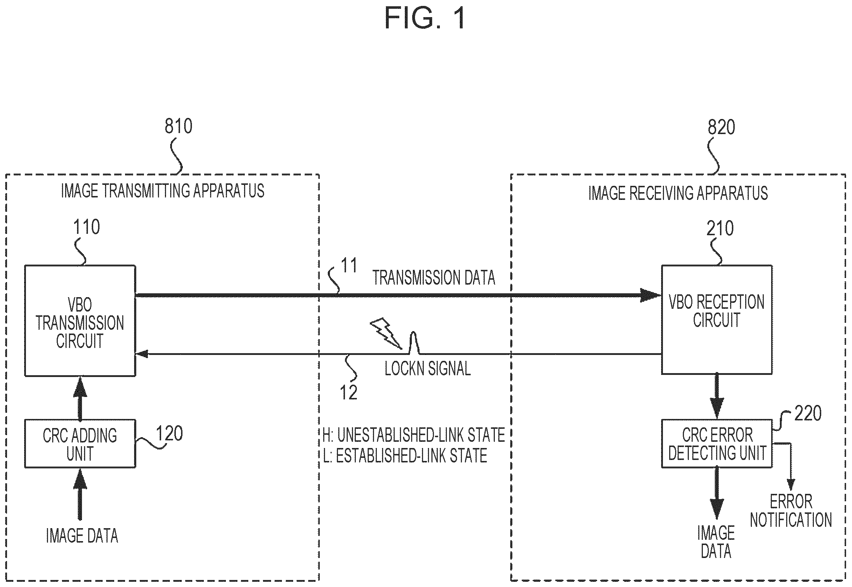

Before the configuration of an image transmission/reception system according to the present exemplary embodiment is described, the configuration of an image transmission/reception system, to which the technique of the present disclosure is not applied, will be described as a comparison example by referring to Fig. 1.

As illustrated in Fig. 1, an image transmission/reception system according to the comparison example includes an image transmitting apparatus 810 and an image receiving apparatus 820. The image transmitting apparatus 810 includes a V-by-One (VBO) transmission circuit 110 and a cyclic redundancy check (CRC) adding unit 120. The image receiving apparatus 820 includes a VBO reception circuit 210 and a CRC error detecting unit 220.

Such an image transmission/reception system is used, for example, to receive/transmit image data, for example, between a photographing device or a scanner device and a signal processor and between a signal processor and an image display device.

The CRC adding unit 120 adds a CRC code, which is an error detecting code, to image data that is to be transmitted to the image receiving apparatus 820. Specifically, the CRC adding unit 120 adds, as a CRC code, the remainder of division of image data by a generator polynomial, which has been set in advance, to the image data.

The VBO transmission circuit 110 transmits, to the image receiving apparatus 820, transmission data 11 obtained by superimposing a clock signal on image data, and receives a LOCKN signal 12 from the image receiving apparatus 820. The LOCKN signal 12 whose logic state is the H level indicates that the image receiving apparatus 820 has not completed a CDR training process and that a clock signal has not been extracted from the transmission data 11, that is, the communication (link) has not been established. The LOCKN signal 12 whose logic state is the L level indicates that the image receiving apparatus 820 has completed a CDR training process and that a clock signal has been extracted from the transmission data 11, that is, the communication has been established. Specifically, the LOCKN signal 12 is a lock signal indicating the lock state of a phase locked loop (PLL) circuit for CDR which is installed in the VBO reception circuit 210.

Therefore, when the input LOCKN signal 12 varies from the H level, which is the logic state indicating that the link has not been established, to the L level, which is the logic state indicating that the link has been established, the VBO transmission circuit 110 transmits, to the image receiving apparatus 820, the transmission data 11 in which a clock signal is superimposed on image data.

The VBO reception circuit 210 extracts a clock signal from the transmission data 11 which has been transmitted from the image transmitting apparatus 810, and obtains image data from the transmission data 11 by using the extracted clock signal. When extraction of a clock signal from the transmission data 11 is ready, the VBO reception circuit 210 varies the LOCKN signal 12, which indicates whether the communication has been established, from the H level, which is the logic state indicating that the communication has not been established, to the L level, which is the logic state indicating that the communication has been established.

The CRC error detecting unit 220 performs error detection on the image data by using the error detecting code added to the image data obtained by the VBO reception circuit 210. Specifically, the CRC error detecting unit 220 extracts a CRC code which has been added to the image data received by the VBO reception circuit 210, and checks if the image data is damaged by determining whether the extracted CRC code matches the remainder of division of the image data by the generator polynomial which has been set in advance. When an error is detected in the received image data, the CRC error detecting unit 220 transmits, to a subsequent circuit, an error notification indicating that the received image data may have an error.

After start of transmission of the transmission data 11 to the image receiving apparatus 820, when the LOCKN signal 12 varies from the H level to the L level, the VBO transmission circuit 110 determines that the image receiving apparatus 820 has completed the CDR training, and transmits, to the image receiving apparatus 820, image data, on which a clock signal is superimposed, as the transmission data 11. When the LOCKN signal 12 varies from the L level to the H level during transmission of the transmission data 11 to the image receiving apparatus 820, the VBO transmission circuit 110 determines that the CDR circuit has been unlocked in the image receiving apparatus 820, and stops transmission of the transmission data 11. Then, the VBO transmission circuit 110 starts a CDR training process again.

The LOCKN signal, which is a single-ended signal, has a noise immunity lower than that of the transmission data 11 which is a pair of differential signals. Therefore, some noise, which occurs between the image transmitting apparatus 810 and the image receiving apparatus 820, may cause the state in which the logic state of the LOCKN signal 12 varies from the L level to the H level and stays at the H level just for a moment. If it is detected that the LOCKN signal 12 is at the H level even for a moment, the VBO transmission circuit 110 determines that the CDR circuit has been unlocked in the image receiving apparatus 820, and stops transmission of the transmission data 11.

### An Exemplary Embodiment using a Technique of the Present Disclosure

Accordingly, an image transmission/reception system according to the present exemplary embodiment employs the configuration described below. Thus, the noise immunity is improved compared with the case in which a LOCKN signal from an image receiving apparatus is input, as it is, to a transmission circuit of an image transmitting apparatus.

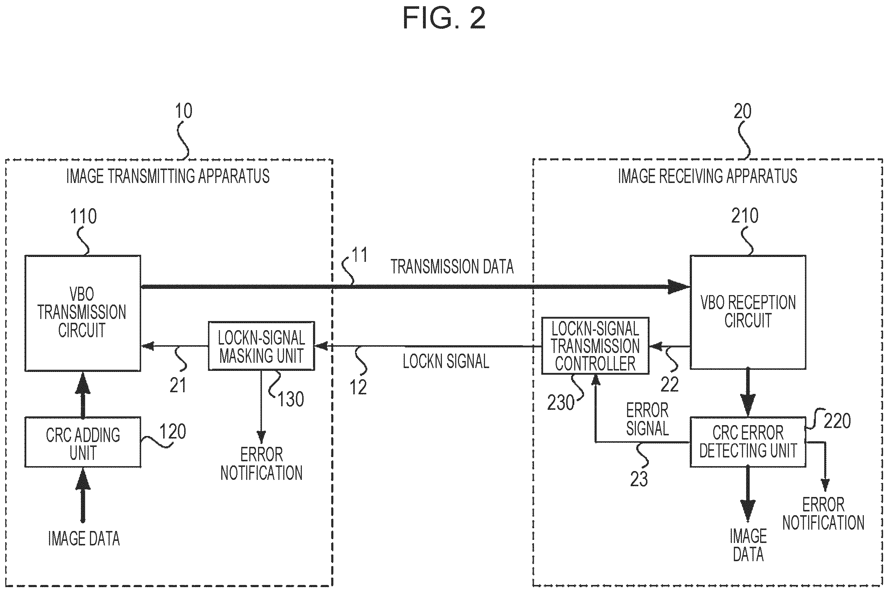

Fig. 2 illustrates the configuration of an image transmission/reception system according to an exemplary embodiment of the present disclosure. In Fig. 2, the same configurations as those in Fig. 1 are designated with the same reference numerals, and will not be described.

As illustrated in Fig. 2, the image transmission/reception system according to the present exemplary embodiment includes an image transmitting apparatus 10 and an image receiving apparatus 20.

The image transmitting apparatus 10 includes the VBO transmission circuit 110, the CRC adding unit 120, and a LOCKN-signal masking unit 130. The image receiving apparatus 20 includes the VBO reception circuit 210, the CRC error detecting unit 220, and a LOCKN-signal transmission controller 230.

The image transmitting apparatus 10 has the configuration of the image transmitting apparatus 810 in Fig. 1 plus the LOCKN-signal masking unit 130. The image receiving apparatus 20 has the configuration of the image receiving apparatus 820 in Fig. 1 plus the LOCKN-signal transmission controller 230.

The VBO transmission circuit 110 according to the present exemplary embodiment transmits, to the image receiving apparatus 20, the transmission data 11 in which a clock signal is superimposed on image data. The VBO transmission circuit 110 receives, as a transmission-side LOCKN signal 21, the LOCKN signal 12 from the image receiving apparatus 20 through the LOCKN-signal masking unit 130. When the input transmission-side LOCKN signal 21 varies from the H level, which is the logic state indicating that the link has not been established, to the L level, which is the logic state indicating that the link has been established, the VBO transmission circuit 110 transmits, to the image receiving apparatus 20, the transmission data 11 in which a clock signal is superimposed on image data.

The LOCKN-signal masking unit 130 receives the LOCKN signal 12 from the image receiving apparatus 20. Even in the case where the received LOCKN signal 12 varies to the L level and then to the H level, only when the received LOCKN signal 12 varies in a preset manner, the LOCKN-signal masking unit 130 outputs, to the VBO transmission circuit 110, the transmission-side LOCKN signal 21 of the H level.

When the LOCKN signal 12 received from the image receiving apparatus 20 varies in the preset manner, the LOCKN-signal masking unit 130 outputs an error notification to a subsequent circuit.

When an error is detected in the received image data, the CRC error detecting unit 220 according to the present exemplary embodiment transmits an error notification to a subsequent circuit, and outputs an error signal 23 of the H level to the LOCKN-signal transmission controller 230.

When a reception-side LOCKN signal 22, which is output from the VBO reception circuit 210, varies from the L level to the H level, the LOCKN-signal transmission controller 230 outputs, to the image transmitting apparatus 10, a signal, which varies in the preset manner, as the LOCKN signal 12. When the CRC error detecting unit 220 detects an error in image data and the error signal 23 is set to the H level, the LOCKN-signal transmission controller 230 also outputs, to the image transmitting apparatus 10, a signal, which varies in the preset manner, as the LOCKN signal 12.

According to the present exemplary embodiment, when the reception-side LOCKN signal 22 which is output from the VBO reception circuit 210 varies from the L level to the H level, the LOCKN-signal transmission controller 230 outputs, to the image transmitting apparatus 10, a signal, in which the H level continues for a preset time, for example, 10 ms or longer, as the LOCKN signal 12.

Even in the case where the LOCKN signal 12 is received from the image receiving apparatus 20 and the received LOCKN signal 12 varies to the L level and then to the H level, the LOCKN-signal masking unit 130 outputs, to the VBO transmission circuit 110, the transmission-side LOCKN signal 21 of the H level only when the H level continues for the preset time, for example, 10 ms or longer.

The time, 10 ms, is an exemplary time which is longer than the predicted time for which the logic state of the LOCKN signal 12 is affected due to occurrence of noise. For example, when the time for which the logic state of the LOCKN signal 12 is affected due to noise is about several milliseconds, the time, 10 ms, is set as a time sufficiently longer than the predicted time for which the logic state of the LOCKN signal 12 is affected due to occurrence of noise, as described above. When the time for which the logic state of the LOCKN signal 12 is affected due to noise is predicted to be much longer, a time of about several tens of milliseconds may be set as a time sufficiently longer than the predicted time for which the logic state of the LOCKN signal 12 is affected due to noise.

As another configuration, when the reception-side LOCKN signal 22, which is output from the VBO reception circuit 210, varies from the L level to the H level, the LOCKN-signal transmission controller 230 may output, to the image transmitting apparatus 10, the LOCKN signal 12 which varies between the H level and the L level a predetermined number of times and which is then set to the H level. In this case, the LOCKN-signal masking unit 130 is set so that, when the LOCKN signal 12 varies between the H level and the L level a predetermined number of times or more and is then set to the H level, the transmission-side LOCKN signal 21 of the H level is output to the VBO transmission circuit 110.

For example, when the reception-side LOCKN signal 22, which is output from the VBO reception circuit 210, varies from the L level to the H level, the LOCKN-signal transmission controller 230 may output, to the image transmitting apparatus 10, the LOCKN signal 12 which varies between the H level and the L level 100 times and is then set to the H level. In this case, the LOCKN-signal masking unit 130 is set so that, when the LOCKN signal 12 varies between the H level and the L level 100 time or more and is then set to the H level, the transmission-side LOCKN signal 21 of the H level is output to the VBO transmission circuit 110.

According to the present exemplary embodiment, the configuration in which the LOCKN-signal masking unit 130 is included in the image transmitting apparatus 10 and in which the LOCKN-signal transmission controller 230 is included in the image receiving apparatus 20 will be described. However, in the case where the transmission-side LOCKN signal 21 is set to the H level when the H level state of the LOCKN signal 12 continues for a preset time or longer, the configuration including only the LOCKN-signal masking unit 130 in the image transmitting apparatus 10 also achieves improvement of noise immunity. However, in the case of such a configuration, an error in image data, which is detected by the CRC error detecting unit 220, is not notified to the image transmitting apparatus 10.

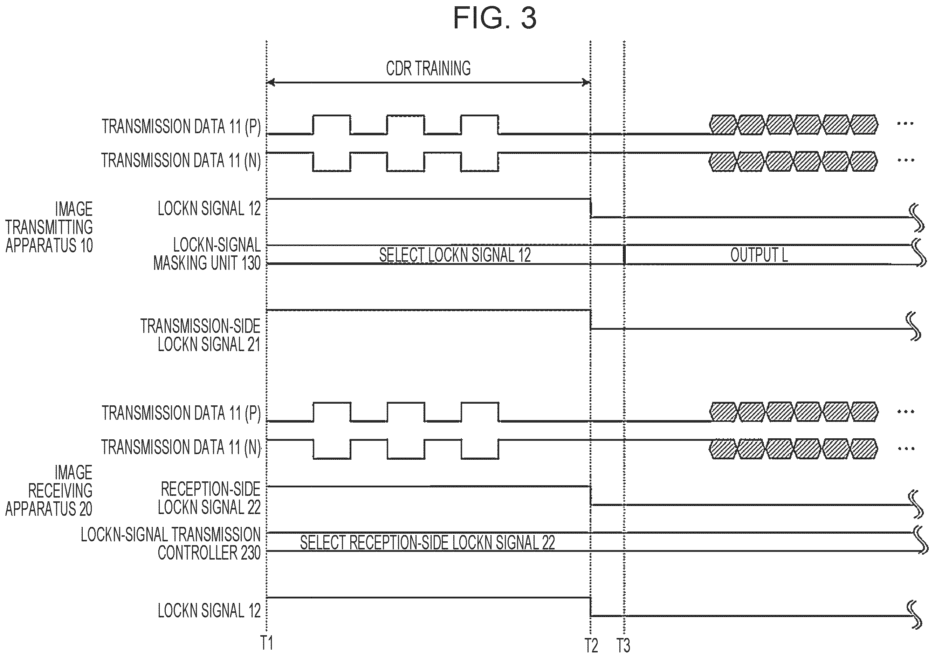

Operations of the image transmission/reception system according to the present exemplary embodiment will be described by referring to the timing charts in Figs. 3 to 6.

Operations, in initialization, of the image transmission/reception system according to the present exemplary embodiment will be described by referring to the timing chart in Fig. 3.

At time T1 in the initial state, the LOCKN-signal masking unit 130 selects the LOCKN signal 12 received from the image receiving apparatus 20, and outputs the selected LOCKN signal 12, as it is, as the transmission-side LOCKN signal 21. The LOCKN-signal transmission controller 230 selects the reception-side LOCKN signal 22 from the VBO reception circuit 210, and outputs the selected reception-side LOCKN signal 22 as the LOCKN signal 12.

In this state, a CDR training process starts between the image transmitting apparatus 10 and the image receiving apparatus 20.

When the CDR training process completes at time T2, the VBO reception circuit 210 sets the reception-side LOCKN signal 22 to the L level. Accordingly, the LOCKN-signal transmission controller 230 sets the LOCKN signal 12 to the L level. As a result, the LOCKN-signal masking unit 130 sets the transmission-side LOCKN signal 21 to the L level, and the VBO transmission circuit 110 grasps completion of the CDR training process.

After that, completion of the CDR training process causes the LOCKN-signal masking unit 130 to fix the transmission-side LOCKN signal 21 at the L level at time T3. Image data is transmitted/received between the image transmitting apparatus 10 and the image receiving apparatus 20 through the transmission data 11.

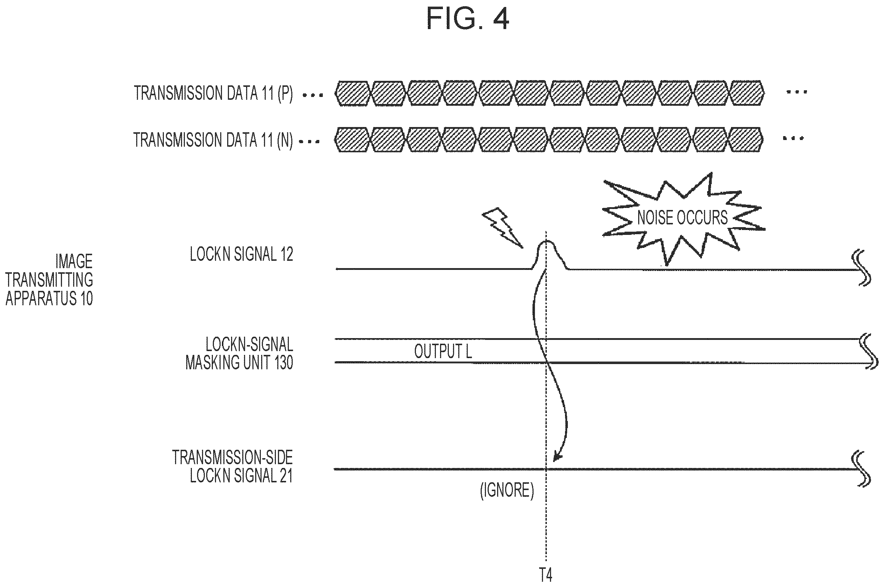

Operations performed when a short noise is superimposed on the LOCKN signal 12 in such a state will be described by referring to the timing chart in Fig. 4.

Fig. 4 shows that noise from the outside is superimposed on the LOCKN signal 12 at time T4. However, even if the LOCKN signal 12 spikes to the H level just for a moment, unless the H-level state of the LOCKN signal 12 continues for 10 ms or longer, the LOCKN-signal masking unit 130 does not vary the logic state of the transmission-side LOCKN signal 21. Therefore, at time T4, the logic state of the transmission-side LOCKN signal 21 remains at the L level, and occurrence of the noise is ignored. As a result, the VBO transmission circuit 110 continues to transmit, to the image receiving apparatus 20, image data through the transmission data 11 without being affected by occurrence of the noise.

Thus, the image transmission/reception system according to the present exemplary embodiment achieves improvement of the noise immunity compared with the case in which the reception-side LOCKN signal 22, which is output from the VBO reception circuit 210 of the image receiving apparatus 20, is input, as it is, to the VBO transmission circuit 110.

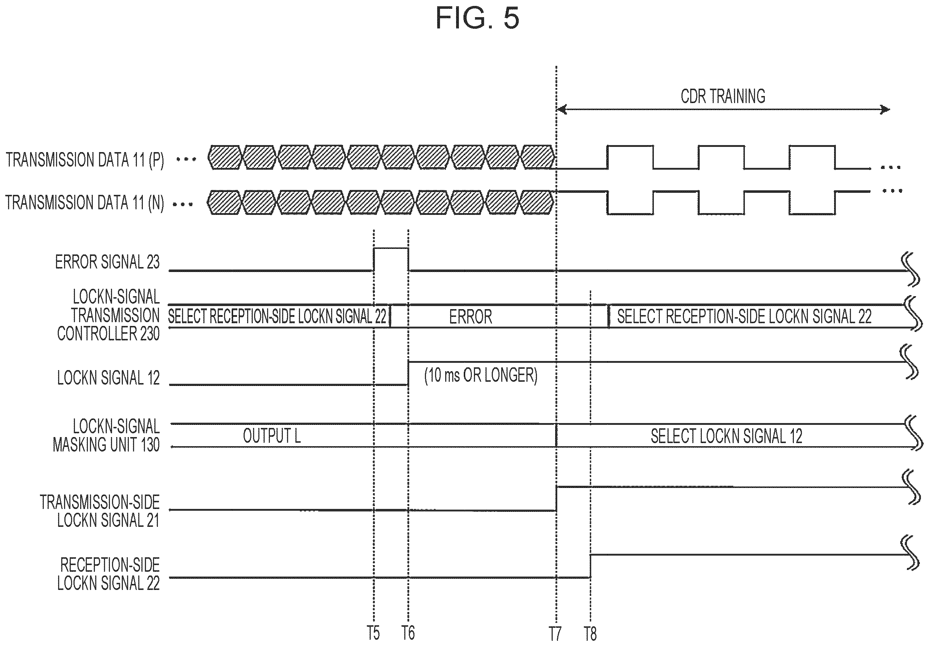

Operations performed when the CRC error detecting unit 220 of the image receiving apparatus 20 detects an error will be described by referring to the timing chart in Fig. 5.

In Fig. 5, at time T5, the CRC error detecting unit 220 detects an error in image data, and sets the error signal 23 to the H level. Therefore, the LOCKN-signal transmission controller 230 determines that some error has occurred. Thus, at time T6, the LOCKN-signal transmission controller 230 sets the LOCKN signal 12 to the H level, and causes the H-level state to continue for 10 ms or longer.

Since the H-level state of the LOCKN signal 12 continues for 10 ms or longer, at time T7, the LOCKN-signal masking unit 130 switches from the state of fixedly outputting the L level to the state of selecting the LOCKN signal 12. As a result, the LOCKN-signal masking unit 130 varies the transmission-side LOCKN signal 21, which has been fixed at the L level, to the H level.

Therefore, the VBO transmission circuit 110 determines that the image receiving apparatus 20 enters the state of being not capable of receiving image data normally. The VBO transmission circuit 110 stops the transmission of image data, and starts a CDR training process. Accordingly, the VBO reception circuit 210 varies the reception-side LOCKN signal 22 to the H level. This causes the LOCKN-signal transmission controller 230 to select the reception-side LOCKN signal 22 for output as the LOCKN signal 12.

When the CDR training process, which has started as described above, completes, like the operations in Fig. 3, image data is transmitted/received between the image transmitting apparatus 10 and the image receiving apparatus 20 through the transmission data 11.

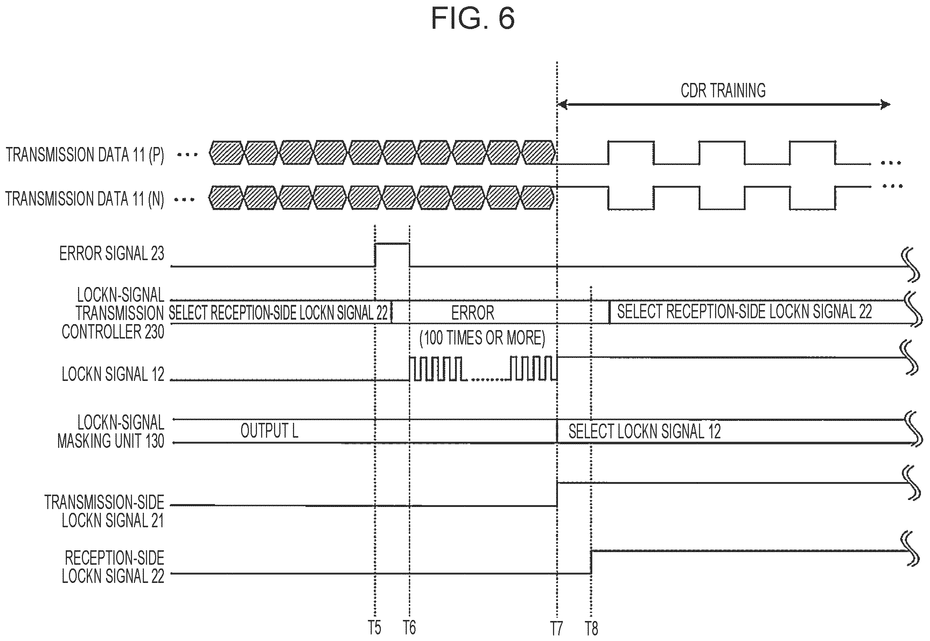

Fig. 5 describes operations performed in the case where, in response to detection of an error, the H-level state of the LOCKN signal 12 continues for a time longer than the time period of noise. In contrast, Fig. 6 illustrates a timing chart of operations performed in the case where, in response to detection of an error, the LOCKN signal 12 varies between the H level and the L level in a preset period a predetermined number of times, for example, 100 times or more.

The timing chart in Fig. 6 is different from that in Fig. 5 only in that, due to the error signal 23 which is set to the H level at time T5, the LOCKN-signal transmission controller 230 varies the LOCKN signal 12 between the H level and the L level 100 times or more, and then sets the LOCKN signal 12 to the H level. The operations other than this in Fig. 6 are the same as those in the timing chart in Fig. 5, and will not be described.

In the present exemplary embodiment described above, the case in which the LOCKN-signal masking unit 130 and the LOCKN-signal transmission controller 230 are configured by using hardware is described. However, the technique of the present disclosure is not limited to such a configuration. Each of the LOCKN-signal masking unit 130 and the LOCKN-signal transmission controller 230 may be configured by using a processor such as a central processing unit (CPU). A program stored in a storage device or the like may be made to be executed on the processor. Thus, the operations of the LOCKN-signal masking unit 130 and the LOCKN-signal transmission controller 230 may be implemented.

In the embodiments above, the term "processor" refers to hardware in a broad sense. Examples of the processor include general processors (e.g., CPU) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

"System" in the present exemplary embodiment encompasses both a system configured with multiple devices and a system configured with a single device.

The technique of the present disclosure may be applied also to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims

### Appendix

(((1))) An image transmitting apparatus comprising:
   a transmission circuit that, in response to an input lock signal switching from a first logic state to a second logic state, transmits, to an image receiving apparatus, transmission data, the transmission data being data in which a clock signal is superimposed on image data, the first logic state indicating that communication has not been established, the second logic state indicating that communication has been established; and
   a lock-signal masking unit that receives the lock signal from the image receiving apparatus, and that, even when the received lock signal enters the second logic state and then varies to the first logic state, only in a case where the first logic state continues for a preset time or longer, outputs a lock signal of the first logic state to the transmission circuit.
(((2))) The image transmitting apparatus according to (((1))),
   wherein, when a period for which the lock signal is in the first logic state continues for a time longer than a predicted time for which the logic state of the lock signal is affected by occurrence of noise, the lock-signal masking unit outputs the lock signal of the first logic state to the transmission circuit.
(((3))) An image transmission/reception system comprising:
   an image receiving apparatus including:
      a reception circuit that extracts a clock signal from transmission data to obtain image data from the transmission data by using the extracted clock signal, the transmission data being transmitted from an image transmitting apparatus, and that, when extraction of a clock signal from the transmission data is ready, varies a lock signal from a first logic state to a second logic state, the lock signal indicating whether communication has been established, the first logic state indicating that the communication has not been established, the second logic state indicating that the communication has been established; and
      a lock-signal transmission controller that, when the lock signal which is output from the reception circuit varies from the second logic state to the first logic state, outputs, to the image transmitting apparatus, a signal as a lock signal, the output signal varying in a preset manner; and
   the image transmitting apparatus including:
      a transmission circuit that, when the lock signal which is input varies from the first logic state to the second logic state, transmits, to the image receiving apparatus, the transmission data in which a clock signal is superimposed on image data; and
      a lock-signal masking unit that receives the lock signal from the image receiving apparatus, and that, when the received lock signal varies in the preset manner, outputs a lock signal of the first logic state to the transmission circuit.
(((4))) The image transmission/reception system according to (((3))),
   wherein, when the lock signal which is output from the reception circuit varies from the second logic state to the first logic state, the lock-signal transmission controller outputs, to the image transmitting apparatus, a lock signal in which the first logic state continues for a preset time or longer, and
   wherein, when the period for which the lock signal is in the first logic state continues for the preset time or longer, the lock-signal masking unit outputs a lock signal of the first logic state to the transmission circuit.
(((5))) The image transmission/reception system according to (((4))),
   wherein, in a case where the lock signal which is output from the reception circuit varies from the second logic state to the first logic state, when the period for which the lock signal is in the first logic state continues at least for a time longer than a predicted time for which the logic state of the lock signal is affected by occurrence of noise, the lock-signal transmission controller outputs, to the image transmitting apparatus, a lock signal in which the first logic state continues for the preset time or longer.
(((6))) The image transmission/reception system according to (((3))),
   wherein, when the lock signal which is output from the reception circuit varies from the second logic state to the first logic state, the lock-signal transmission controller outputs, to the image transmitting apparatus, a lock signal which enters the first logic state after varying between the first logic state and the second logic state a preset number of times, and
   wherein, when the lock signal enters the first logic state after varying between the first logic state and the second logic state the preset number of times or more, the lock-signal masking unit outputs a lock signal of the first logic state to the transmission circuit.
(((7))) The image transmission/reception system according to (((3))),
   wherein the image transmitting apparatus further includes an adding unit that adds an error detecting code to image data which is to be transmitted to the image receiving apparatus,
   wherein the image receiving apparatus further includes a detection unit that performs error detection on the image data by using the error detecting code added to the image data obtained by the reception circuit, and
   wherein, in response to the detection unit detecting an error in the image data, the lock-signal transmission controller outputs, to the image transmitting apparatus, a signal as a lock signal, the output signal varying in the preset manner.
(((8))) A program causing a computer to execute a process comprising:
   in an image transmitting apparatus including a transmission circuit that, in response to an input lock signal switching from a first logic state to a second logic state, the first logic state indicating that communication has not been established, the second logic state indicating that communication has been established, transmits, to an image receiving apparatus, transmission data in which a clock signal is superimposed on image data, receiving the lock signal from the image receiving apparatus; and
   even when the received lock signal enters the second logic state and then varies to the first logic state, only in a case where the first logic state continues for a preset time or longer, outputting a lock signal of the first logic state to the transmission circuit.

The image transmitting apparatus of (((1))) achieves improvement of the noise immunity compared with the case in which a lock signal from an image receiving apparatus is input, as it is, to a transmission circuit of an image transmitting apparatus.

The image transmitting apparatus of (((2))) enables the transmission circuit to be prevented from receiving an erroneous lock signal, even when the logic state of the lock signal is affected by occurrence of noise.

The image transmission/reception system of (((3))) achieves improvement of the noise immunity compared with the case in which a lock signal from an image receiving apparatus is input, as it is, to a transmission circuit of an image transmitting apparatus.

The image transmission/reception system of (((4))) enables the transmission circuit to be prevented from receiving an erroneous lock signal, even when the logic state of the lock signal is affected by occurrence of noise.

The image transmission/reception system of (((5))) enables the transmission circuit to be prevented from receiving an erroneous lock signal, even when the logic state of the lock signal is affected by occurrence of noise.

The image transmission/reception system of (((6))) enables the transmission circuit to be prevented from receiving an erroneous lock signal, even when the logic state of the lock signal is affected by occurrence of noise.

The image transmission/reception system of (((7))) enables the result of error detection in image data to be notified from the image receiving apparatus to the image transmitting apparatus by using the lock signal.

The program of (((8))) achieves improvement of the noise immunity compared with the case in which a lock signal from an image receiving apparatus is input, as it is, to a transmission circuit of an image transmitting apparatus.

## Claims

1. An image transmitting apparatus comprising:
a transmission circuit that, in response to an input lock signal switching from a first logic state to a second logic state, transmits, to an image receiving apparatus, transmission data, the transmission data being data in which a clock signal is superimposed on image data, the first logic state indicating that communication has not been established, the second logic state indicating that communication has been established; and
a lock-signal masking unit that receives the lock signal from the image receiving apparatus, and that, even when the received lock signal enters the second logic state and then varies to the first logic state, only in a case where the first logic state continues for a preset time or longer, outputs a lock signal of the first logic state to the transmission circuit.

2. The image transmitting apparatus according to claim 1,
wherein, when a period for which the lock signal is in the first logic state continues for a time longer than a predicted time for which the logic state of the lock signal is affected by occurrence of noise, the lock-signal masking unit outputs the lock signal of the first logic state to the transmission circuit.

3. An image transmission/reception system comprising:
an image receiving apparatus including:
a reception circuit that extracts a clock signal from transmission data to obtain image data from the transmission data by using the extracted clock signal, the transmission data being transmitted from an image transmitting apparatus, and that, when extraction of a clock signal from the transmission data is ready, varies a lock signal from a first logic state to a second logic state, the lock signal indicating whether communication has been established, the first logic state indicating that the communication has not been established, the second logic state indicating that the communication has been established; and
a lock-signal transmission controller that, when the lock signal which is output from the reception circuit varies from the second logic state to the first logic state, outputs, to the image transmitting apparatus, a signal as a lock signal, the output signal varying in a preset manner; and
the image transmitting apparatus including:
a transmission circuit that, when the lock signal which is input varies from the first logic state to the second logic state, transmits, to the image receiving apparatus, the transmission data in which a clock signal is superimposed on image data; and
a lock-signal masking unit that receives the lock signal from the image receiving apparatus, and that, when the received lock signal varies in the preset manner, outputs a lock signal of the first logic state to the transmission circuit.

4. The image transmission/reception system according to claim 3,
wherein, when the lock signal which is output from the reception circuit varies from the second logic state to the first logic state, the lock-signal transmission controller outputs, to the image transmitting apparatus, a lock signal in which the first logic state continues for a preset time or longer, and
wherein, when the period for which the lock signal is in the first logic state continues for the preset time or longer, the lock-signal masking unit outputs a lock signal of the first logic state to the transmission circuit.

5. The image transmission/reception system according to claim 4,
wherein, in a case where the lock signal which is output from the reception circuit varies from the second logic state to the first logic state, when the period for which the lock signal is in the first logic state continues at least for a time longer than a predicted time for which the logic state of the lock signal is affected by occurrence of noise, the lock-signal transmission controller outputs, to the image transmitting apparatus, a lock signal in which the first logic state continues for the preset time or longer.

6. The image transmission/reception system according to claim 3,
wherein, when the lock signal which is output from the reception circuit varies from the second logic state to the first logic state, the lock-signal transmission controller outputs, to the image transmitting apparatus, a lock signal which enters the first logic state after varying between the first logic state and the second logic state a preset number of times, and
wherein, when the lock signal enters the first logic state after varying between the first logic state and the second logic state the preset number of times or more, the lock-signal masking unit outputs a lock signal of the first logic state to the transmission circuit.

7. The image transmission/reception system according to claim 3,
wherein the image transmitting apparatus further includes an adding unit that adds an error detecting code to image data which is to be transmitted to the image receiving apparatus,
wherein the image receiving apparatus further includes a detection unit that performs error detection on the image data by using the error detecting code added to the image data obtained by the reception circuit, and
wherein, in response to the detection unit detecting an error in the image data, the lock-signal transmission controller outputs, to the image transmitting apparatus, a signal as a lock signal, the output signal varying in the preset manner.

8. A program causing a computer to execute a process comprising:
in an image transmitting apparatus including a transmission circuit that, in response to an input lock signal switching from a first logic state to a second logic state, the first logic state indicating that communication has not been established, the second logic state indicating that communication has been established, transmits, to an image receiving apparatus, transmission data in which a clock signal is superimposed on image data, receiving the lock signal from the image receiving apparatus; and
even when the received lock signal enters the second logic state and then varies to the first logic state, only in a case where the first logic state continues for a preset time or longer, outputting a lock signal of the first logic state to the transmission circuit.

9. A method comprising:
in an image transmitting apparatus including a transmission circuit that, in response to an input lock signal switching from a first logic state to a second logic state, the first logic state indicating that communication has not been established, the second logic state indicating that communication has been established, transmits, to an image receiving apparatus, transmission data in which a clock signal is superimposed on image data, receiving the lock signal from the image receiving apparatus; and
even when the received lock signal enters the second logic state and then varies to the first logic state, only in a case where the first logic state continues for a preset time or longer, outputting a lock signal of the first logic state to the transmission circuit.

## Patentansprüche

1. Bildübertragungsvorrichtung, umfassend:
eine Übertragungsschaltung, die als Reaktion auf ein eingegebenes Lock-Signal, das von einem ersten Logikzustand in einen zweiten Logikzustand wechselt,
Übertragungsdaten an eine Bildempfangsvorrichtung überträgt, wobei die Übertragungsdaten Daten sind, bei denen ein Taktsignal Bilddaten überlagert ist, der erste Logikzustand angibt, dass eine Verbindung nicht hergestellt worden ist, und der zweite Logikzustand angibt, dass eine Verbindung hergestellt worden ist; und
eine Lock-Signal-Maskierungseinheit, die das Lock-Signal von der Bildempfangsvorrichtung empfängt und die, selbst wenn das empfangene Lock-Signal in den zweiten Logikzustand eintritt und dann in den ersten Logikzustand variiert, nur in einem Fall, in dem der erste Logikzustand für eine voreingestellte Zeit oder länger besteht, ein Lock-Signal des ersten Logikzustands an die Übertragungsschaltung ausgibt.

2. Bildübertragungsvorrichtung nach Anspruch 1,
wobei, wenn ein Zeitraum, in dem das Lock-Signal in dem ersten Logikzustand ist, für eine Zeit länger als eine vorhergesagte Zeit, in der der Logikzustand des Lock-Signals durch Auftreten von Rauschen beeinflusst wird, besteht, die Lock-Signal-Maskierungseinheit das Lock-Signal des ersten Logikzustands an die Übertragungsschaltung ausgibt.

3. Bildübertragungs-/-empfangssystem, umfassend:
eine Bildempfangsvorrichtung, die enthält:
eine Empfangsschaltung, die ein Taktsignal aus Übertragungsdaten extrahiert, um Bilddaten aus den Übertragungsdaten durch Verwenden des extrahierten Taktsignals zu erhalten, wobei die Übertragungsdaten von einer Bildübertragungsvorrichtung übertragen werden, und die, wenn Extraktion eines Taktsignals aus den Übertragungsdaten bereit ist, ein Lock-Signal von einem ersten Logikzustand in einen zweiten Logikzustand variiert, wobei das Lock-Signal angibt, ob eine Verbindung hergestellt worden ist, der erste Logikzustand angibt, dass die Verbindung nicht hergestellt worden ist, und der zweite Logikzustand angibt, dass die Verbindung hergestellt worden ist; und
eine Lock-Signal-Übertragungssteuerung, die, wenn das Lock-Signal, das von der Empfangsschaltung ausgegeben wird, von dem zweiten Logikzustand in den ersten Logikzustand variiert, ein Signal als ein Lock-Signal an die Bildübertragungsvorrichtung ausgibt, wobei das ausgegebene Signal auf eine voreingestellte Weise variiert; und
die Bildübertragungsvorrichtung, die enthält:
eine Übertragungsschaltung, die, wenn das eingegebene Lock-Signal von dem ersten Logikzustand in den zweiten Logikzustand variiert, die Übertragungsdaten, bei denen ein Taktsignal Bilddaten überlagert ist, an die Bildempfangsvorrichtung überträgt; und
eine Lock-Signal-Maskierungseinheit, die das Lock-Signal von der Bildempfangsvorrichtung empfängt und die, wenn das empfangene Lock-Signal auf die voreingestellte Weise variiert, ein Lock-Signal des ersten Logikzustands an die Übertragungsschaltung ausgibt.

4. Bildübertragungs-/-empfangssystem nach Anspruch 3,
wobei, wenn das Lock-Signal, das von der Empfangsschaltung ausgegeben wird, von dem zweiten Logikzustand in den ersten Logikzustand variiert, die Lock-Signal-Übertragungssteuerung ein Lock-Signal, bei dem der erste Logikzustand für eine voreingestellte Zeit oder länger besteht, an die Bildübertragungsvorrichtung ausgibt, und
wobei, wenn der Zeitraum, in dem das Lock-Signal in dem ersten Logikzustand ist, für die voreingestellte Zeit oder länger besteht, die Lock-Signal-Maskierungseinheit ein Lock-Signal des ersten Logikzustands an die Übertragungsschaltung ausgibt.

5. Bildübertragungs-/-empfangssystem nach Anspruch 4,
wobei in einem Fall, in dem das Lock-Signal, das von der Empfangsschaltung ausgegeben wird, von dem zweiten Logikzustand in den ersten Logikzustand variiert, wenn der Zeitraum, in dem das Lock-Signal in dem ersten Logikzustand ist, mindestens für eine Zeit länger als eine vorhergesagte Zeit, in der der Logikzustand des Lock-Signals durch Auftreten von Rauschen beeinflusst wird, besteht, die Lock-Signal-Übertragungssteuerung ein Lock-Signal, bei dem der erste Logikzustand für die voreingestellte Zeit oder länger besteht, an die Bildübertragungsvorrichtung ausgibt.

6. Bildübertragungs-/-empfangssystem nach Anspruch 3,
wobei, wenn das Lock-Signal, das von der Empfangsschaltung ausgegeben wird, von dem zweiten Logikzustand in den ersten Logikzustand variiert, die Lock-Signal-Übertragungssteuerung ein Lock-Signal, das in den ersten Logikzustand eintritt, nachdem es zwischen dem ersten Logikzustand und dem zweiten Logikzustand eine voreingestellte Anzahl an Malen variiert hat, an die Bildübertragungsvorrichtung ausgibt, und
wobei, wenn das Lock-Signal in den ersten Logikzustand eintritt, nachdem es zwischen dem ersten Logikzustand und dem zweiten Logikzustand die voreingestellte Anzahl an Malen oder öfter variiert hat, die Lock-Signal-Maskierungseinheit ein Lock-Signal des ersten Logikzustands an die Übertragungsschaltung ausgibt.

7. Bildübertragungs-/-empfangssystem nach Anspruch 3,
wobei die Bildübertragungsvorrichtung ferner eine Hinzufügungseinheit enthält, die einen Fehlerdetektionscode zu Bilddaten hinzufügt, die an die Bildempfangsvorrichtung zu übertragen sind,
wobei die Bildempfangsvorrichtung ferner eine Detektionseinheit enthält, die Fehlerdetektion an den Bilddaten durch Verwenden des Fehlerdetektionscodes durchführt, der den Bilddaten hinzugefügt worden ist, die von der Empfangsschaltung erhalten worden sind, und
wobei als Reaktion auf die Detektionseinheit, die einen Fehler in den Bilddaten detektiert, die Lock-Signal-Übertragungssteuerung ein Signal als ein Lock-Signal an die Bildübertragungsvorrichtung ausgibt, wobei das ausgegebene Signal auf die voreingestellte Weise variiert.

8. Programm, das einen Computer veranlasst, einen Prozess auszuführen, der umfasst:
bei einer Bildübertragungsvorrichtung, die eine Übertragungsschaltung enthält, die als Reaktion auf ein eingegebenes Lock-Signal, das von einem ersten Logikzustand in einen zweiten Logikzustand wechselt, wobei der erste Logikzustand angibt, dass eine Verbindung nicht hergestellt worden ist, und der zweite Logikzustand angibt, dass eine Verbindung hergestellt worden ist, Übertragungsdaten, bei denen ein Taktsignal Bilddaten überlagert ist, an eine Bildempfangsvorrichtung überträgt, Empfangen des Lock-Signals von der Bildempfangsvorrichtung; und
selbst wenn das empfangene Lock-Signal in den zweiten Logikzustand eintritt und dann in den ersten Logikzustand variiert, nur in einem Fall, in dem der erste Logikzustand für eine voreingestellte Zeit oder länger besteht, Ausgeben eines Lock-Signals des ersten Logikzustands an die Übertragungsschaltung.

9. Verfahren, umfassend:
bei einer Bildübertragungsvorrichtung, die eine Übertragungsschaltung enthält, die als Reaktion auf ein eingegebenes Lock-Signal, das von einem ersten Logikzustand in einen zweiten Logikzustand wechselt, wobei der erste Logikzustand angibt, dass eine Verbindung nicht hergestellt worden ist, und der zweite Logikzustand angibt, dass eine Verbindung hergestellt worden ist, Übertragungsdaten, bei denen ein Taktsignal Bilddaten überlagert ist, an eine Bildempfangsvorrichtung überträgt, Empfangen des Lock-Signals von der Bildempfangsvorrichtung; und
selbst wenn das empfangene Lock-Signal in den zweiten Logikzustand eintritt und dann in den ersten Logikzustand variiert, nur in einem Fall, in dem der erste Logikzustand für eine voreingestellte Zeit oder länger besteht, Ausgeben eines Lock-Signals des ersten Logikzustands an die Übertragungsschaltung.

## Revendications

1. Appareil de transmission d'images comprenant :
un circuit de transmission qui, en réponse à un signal de verrouillage d'entrée passant d'un premier état logique à un deuxième état logique, transmet, à un appareil de réception d'images, des données de transmission, les données de transmission étant des données dans lesquelles un signal d'horloge est superposé à des données d'image, le premier état logique indiquant qu'une communication n'a pas été établie, le deuxième état logique indiquant qu'une communication a été établie ; et
une unité de masquage de signal de verrouillage qui reçoit le signal de verrouillage provenant de l'appareil de réception d'images, et qui, même lorsque le signal de verrouillage reçu entre dans le deuxième état logique puis varie au premier état logique, seulement dans un cas où le premier état logique persiste pendant une durée prédéfinie ou plus, délivre un signal de verrouillage du premier état logique au circuit de transmission.

2. Appareil de transmission d'images selon la revendication 1,
dans lequel, lorsqu'une période pendant laquelle le signal de verrouillage est dans le premier état logique persiste pendant une durée supérieure à une durée prédite pendant laquelle l'état logique du signal de verrouillage est affecté par l'apparition de bruit, l'unité de masquage de signal de verrouillage délivre le signal de verrouillage du premier état logique au circuit de transmission.

3. Système de transmission/réception d'images comprenant :
un appareil de réception d'images incluant :
un circuit de réception qui extrait un signal d'horloge à partir de données de transmission pour obtenir des données d'image à partir des données de transmission en utilisant le signal d'horloge extrait, les données de transmission étant transmises par un appareil de transmission d'images, et qui, lorsque l'extraction d'un signal d'horloge à partir des données de transmission est prête, fait varier un signal de verrouillage d'un premier état logique à un deuxième état logique, le signal de verrouillage indiquant si une communication a été établie, le premier état logique indiquant que la communication n'a pas été établie, le deuxième état logique indiquant que la communication a été établie ; et
un contrôleur de transmission de signal de verrouillage qui, lorsque le signal de verrouillage qui est délivré par le circuit de réception varie du deuxième état logique au premier état logique, délivre, à l'appareil de transmission d'images, un signal servant de signal de verrouillage, le signal délivré variant d'une manière prédéfinie ; et
l'appareil de transmission d'images incluant :
un circuit de transmission qui, lorsque le signal de verrouillage qui est entré varie du premier état logique au deuxième état logique, transmet, à l'appareil de réception d'images, les données de transmission dans lesquelles un signal d'horloge est superposé à des données d'image ; et
une unité de masquage de signal de verrouillage qui reçoit le signal de verrouillage provenant de l'appareil de réception d'images, et qui, lorsque le signal de verrouillage reçu varie de la manière prédéfinie, délivre un signal de verrouillage du premier état logique au circuit de transmission.

4. Système de transmission/réception d'images selon la revendication 3,
dans lequel, lorsque le signal de verrouillage qui est délivré par le circuit de réception varie du deuxième état logique au premier état logique, le contrôleur de transmission de signal de verrouillage délivre, à l'appareil de transmission d'images, un signal de verrouillage dans lequel le premier état logique persiste pendant une durée prédéfinie ou plus, et
dans lequel, lorsque la période pendant laquelle le signal de verrouillage est dans le premier état logique persiste pendant la durée prédéfinie ou plus, l'unité de masquage de signal de verrouillage délivre un signal de verrouillage du premier état logique au circuit de transmission.

5. Système de transmission/réception d'images selon la revendication 4,
dans lequel, dans un cas où le signal de verrouillage qui est délivré par le circuit de réception varie du deuxième état logique au premier état logique, lorsque la période pendant laquelle le signal de verrouillage est dans le premier état logique persiste au moins pendant une durée supérieure à une durée prédite pendant laquelle l'état logique du signal de verrouillage est affecté par l'apparition de bruit, le contrôleur de transmission de signal de verrouillage délivre, à l'appareil de transmission d'images, un signal de verrouillage dans lequel le premier état logique persiste pendant la durée prédéfinie ou plus.

6. Système de transmission/réception d'images selon la revendication 3,
dans lequel, lorsque le signal de verrouillage qui est délivré par le circuit de réception varie du deuxième état logique au premier état logique, le contrôleur de transmission de signal de verrouillage délivre, à l'appareil de transmission d'images, un signal de verrouillage qui entre dans le premier état logique après avoir varié entre le premier état logique et le deuxième état logique un nombre prédéfini de fois, et
dans lequel, lorsque le signal de verrouillage entre dans le premier état logique après avoir varié entre le premier état logique et le deuxième état logique le nombre prédéfini de fois ou plus, l'unité de masquage de signal de verrouillage délivre un signal de verrouillage du premier état logique au circuit de transmission.

7. Système de transmission/réception d'images selon la revendication 3,
dans lequel l'appareil de transmission d'images inclut en outre une unité d'ajout qui ajoute un code de détection d'erreur à des données d'image qui doivent être transmises à l'appareil de réception d'images,
dans lequel l'appareil de réception d'images inclut en outre une unité de détection qui effectue une détection d'erreur sur les données d'image en utilisant le code de détection d'erreur ajouté aux données d'image obtenues par le circuit de réception, et dans lequel, en réponse à l'unité de détection détectant une erreur dans les données d'image, le contrôleur de transmission de signal de verrouillage délivre, à l'appareil de transmission d'images, un signal servant de signal de verrouillage, le signal délivré variant de la manière prédéfinie.

8. Programme amenant un ordinateur à exécuter un processus comprenant :
dans un appareil de transmission d'images incluant un circuit de transmission qui, en réponse à un signal de verrouillage d'entrée passant d'un premier état logique à un deuxième état logique, le premier état logique indiquant qu'une communication n'a pas été établie, le deuxième état logique indiquant qu'une communication a été établie, transmet, à un appareil de réception d'images, des données de transmission dans lesquelles un signal d'horloge est superposé à des données d'image, recevoir le signal de verrouillage provenant de l'appareil de réception d'images ; et
même lorsque le signal de verrouillage reçu entre dans le deuxième état logique puis varie au premier état logique, seulement dans un cas où le premier état logique persiste pendant une durée prédéfinie ou plus, délivrer un signal de verrouillage du premier état logique au circuit de transmission.

9. Procédé comprenant :
dans un appareil de transmission d'images incluant un circuit de transmission qui, en réponse à un signal de verrouillage d'entrée passant d'un premier état logique à un deuxième état logique, le premier état logique indiquant qu'une communication n'a pas été établie, le deuxième état logique indiquant qu'une communication a été établie, transmet, à un appareil de réception d'images, des données de transmission dans lesquelles un signal d'horloge est superposé à des données d'image, recevoir le signal de verrouillage provenant de l'appareil de réception d'images ; et
même lorsque le signal de verrouillage reçu entre dans le deuxième état logique puis varie au premier état logique, seulement dans un cas où le premier état logique persiste pendant une durée prédéfinie ou plus, délivrer un signal de verrouillage du premier état logique au circuit de transmission.
